# EUROPEAN PATENT APPLICATION

(11) **EP 4 300 689 A1**
(43) Date of publication of application: **03.01.2024**
(21) Application number: 22759588.1
(22) Date of filing: 21.02.2022
(51) Int. Cl.: H01M 50/291, H01M 50/298

(54) **BATTERY PACK**

(30) Priority: 25.02.2021 JP 2021028999
(71) Applicant: HONDA MOTOR CO., LTD., Minato-ku Tokyo 107-8556 (JP)
(72) Inventor: ITO, Keiichi, Wako-shi, Saitama 351-0193 (JP)
(74) Representative: Weickmann & Weickmann PartmbB
(86) International application number: PCT/JP2022/006998
(87) International publication number: WO 2022/181552

(57) **Abstract**

A battery pack (10) is provided with a cell holder (26, 28, 52, 54) including a holder main body portion (30, 40, 56, 62), and a casing 18 accommodating the cell holder. The holder main body portion holds a plurality of unit cells. Protruding extended portions (32, 42, 58, 64) projecting toward an inner wall of the casing 18 are provided on an outer wall of the holder main body portion. The protruding extended portions include abutting extended portions (32A, 42A, 58A, 64A) which abut the inner wall of the casing.

## Description

### TECHNICAL FIELD

The present invention relates to a battery pack including a cell holder holding a plurality of unit cells and a casing housing the cell holder.

### BACKGROUND ART

WO 2019/230879 A1 describes a cell holder holding a plurality of unit cells and a battery pack housing the cell holder in a casing. Here, the casing has a substantially rectangular parallelepiped shape, as shown particularly in FIGS. 1, 2, and 4 of WO 2019/230879 A1. The four side surfaces of the casing are substantially flat.

### SUMMARY OF THE INVENTION

In a case of such a battery pack, improvement in appearance or design may be desired. In order to meet this desire, it is conceivable to curve at least one side surface of the battery pack so as to bulge from both end portions toward an intermediate portion in a width direction orthogonal to a longitudinal direction (height direction) of the battery pack.

At the bulging portion, the inner wall of the casing and the outer wall of the cell holder are separated from each other. That is, a gap is formed between the cell holder and the casing. Therefore, it is not easy to position the cell holder in the casing.

In order to avoid this problem, it is conceivable to insert a spacer between the cell holder and the casing. In this case, however, the spacer must be produced. Moreover, it is necessary to join the spacer to the outer wall of the cell holder or the inner wall of the casing. Therefore, the number of working steps until the battery pack is obtained increases. In addition, the manufacturing operation of the battery pack is complicated.

A primary object of the present invention is to provide a battery pack that does not require a spacer as a separate member.

Another object of the present invention is to provide a battery pack in which it is easy to position the cell holder in the casing.

According to an embodiment of the present invention, there is provided a battery pack including a cell holder that holds a plurality of unit cells and a casing that houses the cell holder, wherein
the cell holder includes a holder body portion that holds the plurality of unit cells, and a convex extension portion that extends from an outer wall of the holder body portion toward an inner wall of the casing, and
the convex extension portion includes an abutting extension portion that abuts an inner wall of the casing.

According to the present invention, the abutting extension portion is integrally formed on the inner wall of the casing that houses the cell holder. The abutting extension portion comes into contact with the cell holder holding the unit cells. Thus, the cell holder is positioned with respect to the casing. Therefore, the assembly of the battery pack is facilitated. Moreover, in this case, it is not necessary to separately produce a spacer. There is also no need to join the spacer to the cell holder. Therefore, the assembly of the battery pack is simplified. Further, an increase in the number of work steps is avoided.

### BRIEF DESCRIPTION OF DRAWINGS

FIG. 1 is a schematic overall perspective view of a battery pack according to an embodiment of the present invention;
FIG. 2 is a schematic cross-sectional view in a direction orthogonal to a longitudinal direction of the battery pack;
FIG. 3 is a schematic perspective view of a first core pack and a second core pack constituted by four holders; and
FIG. 4 is a schematic front view of the first core pack and the second core pack.

### DETAILED DESCRIPTION OF THE INVENTION

In the following description, "down" and "up" correspond to the lower side and the upper side of each drawing. Out of side wall portions of a casing 18, a first row holder 26, a second row holder 28, a third row holder 52, and a fourth row holder 54, the side wall portions facing an arch-shaped portion 16a are referred to as "front surface portions". In addition, the side wall portions located across from the front surface portions are referred to as "back surface portions". These directions and names are given only for simplifying the description and facilitating understanding and do not necessarily indicate directions or postures for when the battery pack is discharged or charged.

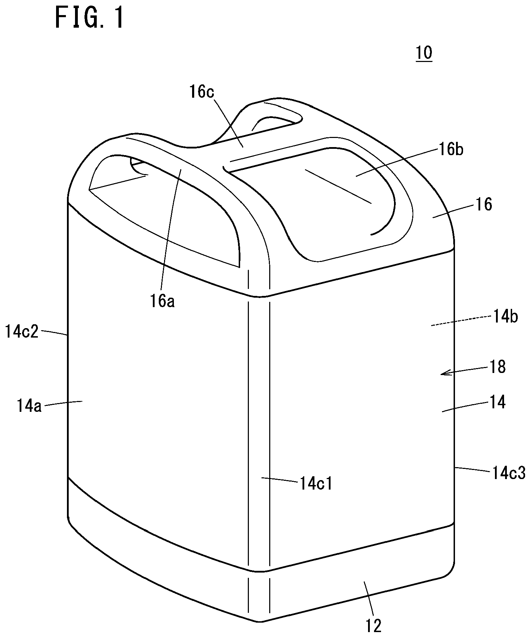

FIG. 1 is a schematic overall perspective view of a battery pack 10 according to the present embodiment. The battery pack 10 includes a casing 18. The casing 18 includes a bottom cover 12, an elongated casing body 14, and a top cover 16. The casing body 14 is formed of a hollow body having a substantially quadrangular tubular shape with both ends in the longitudinal direction (height direction) opened. Here, the both ends in the longitudinal direction are the lower end and the upper end in FIG. 1. The bottom cover 12 closes an opening at a lower end of the casing body 14. The top cover 16 closes an opening at the upper end.

The top cover 16 is provided with an arch-shaped portion 16a and a tab-shaped portion 16b projecting from an upper surface of the top cover 16. A grip bar 16c is provided from the arch-shaped portion 16a to the tab-shaped portion 16b. In a plan view of the battery pack 10, a view from the top cover 16 side, the tab-shaped portion 16b, the grip bar 16c, and the arch-shaped portion 16a are connected in a substantially H-shape.

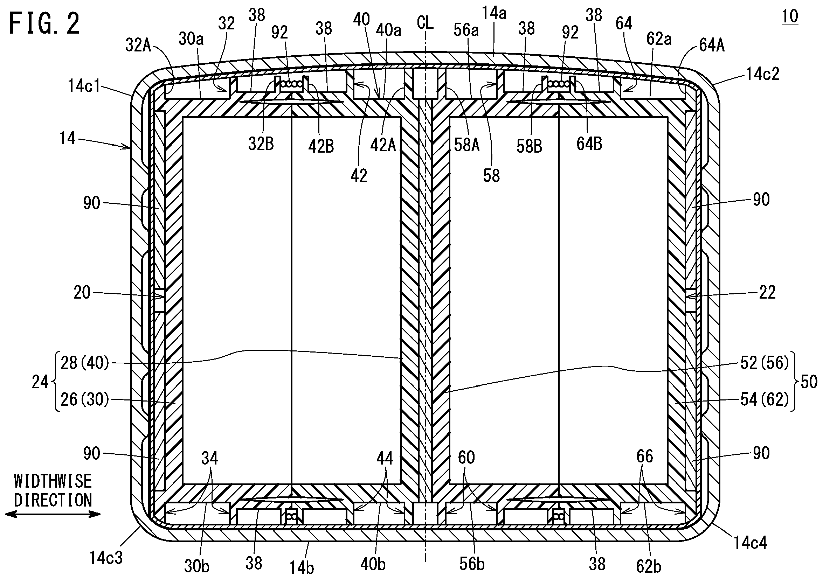

In the casing body 14, a front surface portion 14a facing toward the arch-shaped portion 16a curves along the widthwise direction. The widthwise direction is a direction orthogonal to the longitudinal direction. That is, as shown in FIG. 2, the front surface portion 14a gradually bulges from the widthwise end portions (corner portions 14c1 and 14c2) toward the widthwise intermediate portion. For this reason, the front surface portion 14a is rounded. In this way, the battery pack 10 exhibits an excellent appearance (design) with the front surface portion 14a bulging most at the widthwise intermediate portion. Note that the front surfaces of the bottom cover 12 and the top cover 16 do not need to curve. However, it is preferable that the front surfaces of the bottom cover 12 and the top cover 16 also curve to match the front surface portion 14a of the casing body 14. In this case, the design of the battery pack 10 further improves.

Since the casing body 14 has a substantially quadrangular tubular shape, the casing body 14 has four corner portions 14c1 to 14c4 bent at substantially 90°. The corner portion 14c1 and the corner portion 14c2 are widthwise end portions of the front surface portion 14a. The inner walls and the outer walls of the corners portions 14c1 to 14c4 gently curve.

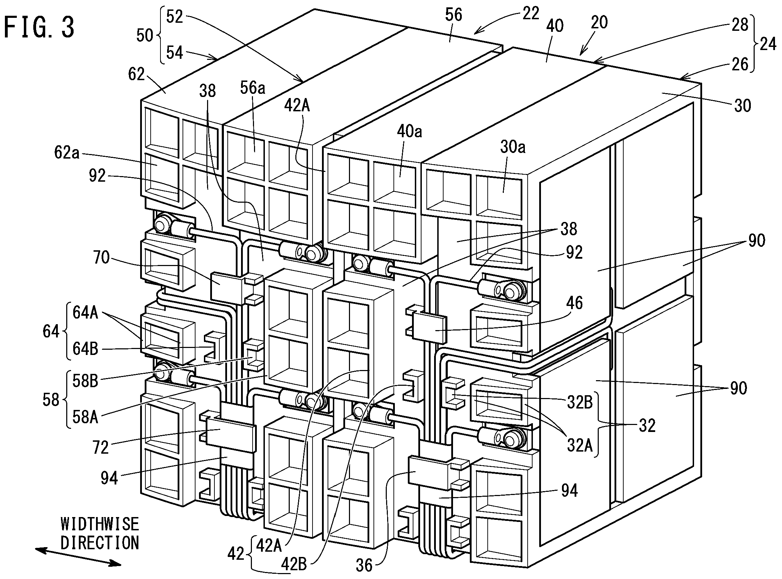

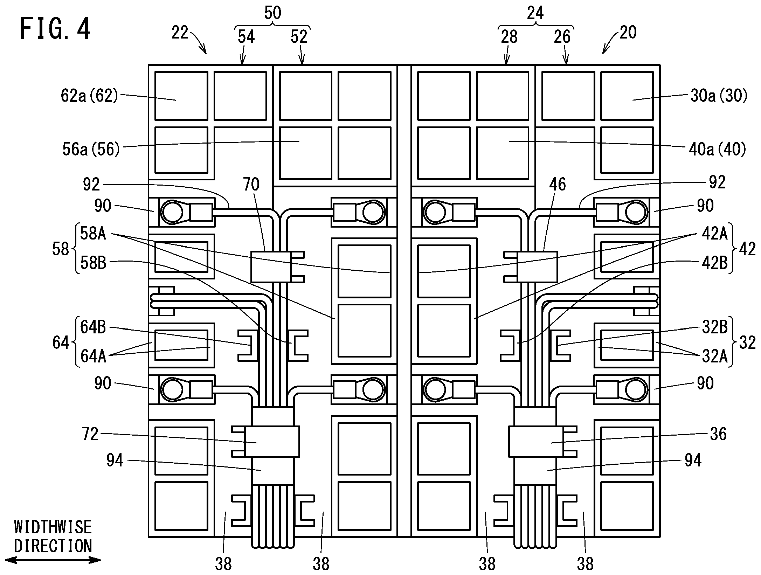

A first core pack 20 and a second core pack 22 shown in FIGS. 3 and 4 are housed in the casing 18. The first core pack 20 will be described. The first core pack 20 has a first cell holder 24 for holding a plurality of unit cells (not shown). Further, the first cell holder 24 includes a first row holder 26 as a first holder and a second row holder 28 as a second holder.

The first row holder 26 includes a first body portion 30 (holder body portion), a first front-side convex extension portion 32, and a first back-side convex extension portion 34. As shown in FIG. 7 of WO 2019/230879 A1, the first body portion 30 is formed with housing holes for housing the unit cells. The first front-side convex extension portion 32 is a convex portion that protrudes from the outer wall of the front surface 30a of the first body portion 30. The first front-side convex extension portion 32 extends toward the inner wall of the front surface portion 14a of the casing body 14. The first back-side convex extension portion 34 is a convex portion that protrudes from the outer wall of the back surface 30b (see FIG. 2), which is a back surface of the front surface 30a. The first back-side convex extension portion 34 extends toward the inner wall of the back surface portion 14b of the casing body 14.

As understood from FIG. 2, the first front-side convex extension portion 32 includes a long extension portion 32A (abutting extension portion) and a short extension portion 32B (non-abutting extension portion). The amount of protrusion of the long extension portion 32A is larger. Therefore, the long extension portion 32A abuts the inner wall of the front surface portion 14a of the casing body 14. The amount of protrusion of the short extension portion 32B is smaller. Therefore, the short extension portion 32B does not abut the inner wall of the front surface portion 14a of the casing body 14.

As shown in FIGS. 3 and 4, the long extension portion 32A is formed in a lattice shape on the front surface 30a of the first body portion 30. The amount of protrusion of the long extension portion 32A is small at the widthwise end portion (corner portion 14c1) of the casing body 14, and increases as it approaches the widthwise intermediate portion. The long extension portion 32A provided at the widthwise end portion abuts the inner wall of the corner portion 14c1 of the casing body 14. That is, the long extension portion 32A provided at the widthwise end portion is a corner abutting extension portion.

The short extension portion 32B is provided in the vicinity of an abutting surface of the first row holder 26 abutting the second row holder 28. Part of the short extension portion 32B protrudes toward the inner wall of the casing body 14 and then bends toward the second row holder 28. Because of this bending, a bent portion 36 is formed at the distal end of the short extension portion 32B. The bent portion 36 covers an abutting surface of the first row holder 26 abutting the second row holder 28. Thus, the bent portion 36 covers and hides part of the abutting surface.

The long extension portion 32A and the short extension portion 32B adjacent to each other among the long extension portions 32A and the short extension portion 32B are continuous with each other via a coupling wall portion 38 that is slightly apart from the front surface 30a of the first body portion 30. Therefore, a clearance is formed between the front surface 30a of the first body portion 30 and the coupling wall portion 38. Because of this separation, when the first row holder 26 is injection-molded from molten plastic, it is possible to avoid the occurrence of sink marks at the proximal ends of the long extension portion 32A and the short extension portion 32B.

The second row holder 28 includes a second body portion 40 (holder body portion), a second front-side convex extension portion 42, and a second back-side convex extension portion 44. The second body portion 40 is formed with a receiving hole for receiving the unit cell. The second front-side convex extension portion 42 is a convex portion that protrudes from the outer wall of the front surface 40a of the second body portion 40. The second front-side convex extension portion 42 extends toward the inner wall of the front surface portion 14a of the casing body 14. The second back-side convex extension portion 44 is a convex portion that protrudes from the outer wall of the back surface 40b (see FIG. 2) that is a back surface with respect to the front surface 40a. The second back-side convex extension portion 44 extends toward the inner wall of the back surface portion 14b of the casing body 14.

As shown in FIG. 2, the second front-side convex extension portion 42 includes a long extension portion 42A (abutting extension portion) and a short extension portion 42B (non-abutting extension portion). The amount of protrusion of the long extension portion 42A is larger. Therefore, the long extension portion 42A abuts the inner wall of the front surface portion 14a of the casing body 14. The long extension portion 42A decreases as it goes from the widthwise intermediate portion of the casing body 14 toward the widthwise end portion thereof in accordance with the degree of bulging of the casing body 14. The amount of protrusion of the short extension portion 42B is smaller. Therefore, the short extension portion 42B does not abut the inner wall of the front surface portion 14a of the casing body 14.

The short extension portion 42B is provided in the vicinity of an abutting surface of the first row holder 26 abutting the second row holder 28. Part of the short extension portion 42B extends toward the inner wall of the front surface portion 14a of the casing body 14 and then bends toward the first row holder 26. Because of this bending, a bent portion 46 is formed at the distal end of the short extension portion 32B. The bent portion 46 covers part of the abutting surface of the second row holder 28 abutting the first row holder 26. Thus, the bent portion 46 covers and hides part of the abutting surface. Therefore, when the cell holder is viewed in a plan view, the bent portion 36 of the first row holder 26 and the bent portion 46 of the second row holder 28 vertically overlap each other.

The second core pack 22 has a second cell holder 50 that holds a plurality of unit cells (not shown). The second cell holder 50 includes a third row holder 52 as a first holder and a fourth row holder 54 as a second holder.

The third row holder 52 includes a third body portion 56 (holder body portion), a third front-side convex extension portion 58, and a third back-side convex extension portion 60. The fourth row holder 54 includes a fourth body portion 62 (holder body portion), a fourth front-side convex extension portion 64, and a fourth back-side convex extension portion 66. The third body portion 56 and the fourth body portion 62 are formed with housing holes for housing the unit cells.

The third front-side convex extension portion 58 and the fourth front-side convex extension portion 64 are convex portions formed so as to protrude from the outer walls of the front surfaces 56a, 62a of the third body portion 56 and the fourth body portion 62, respectively. The third front-side convex extension portion 58 and the fourth front-side convex extension portion 64 extend toward the inner wall of the front surface portion 14a of the casing body 14. The third back-side convex extension portion 60 and the fourth back-side convex extension portion 66 are convex portions formed so as to protrude from the outer wall of each back surface 56b, 62b of the third body portion 56 and the fourth body portion 62, respectively. The third front-side convex extension portion 58 and the fourth front-side convex extension portion 64 extend toward the inner wall of the back surface portion 14b of the casing body 14.

As shown in FIG. 2, the third front-side convex extension portion 58 includes a long extension portion 58A and a short extension portion 58B. The fourth front-side convex extension portion 64 includes a long extension portion 64A and a short extension portion 64B. The amount of protrusion of each of the long extension portion 58A and the long extension portion 64A is large. Therefore, the long extension portion 58A and the long extension portion 64A abut the inner wall of the front surface portion 14a of the casing body 14. That is, the long extension portion 58A and the long extension portion 64A serve as abutting extension portions. The amount of protrusion of each of the short extension portion 58B and the short extension portion 64B is smaller. Therefore, the short extension portion 58B and the short extension portion 64B do not abut the inner wall of the front surface portion 14a of the casing body 14. That is, the short extension portion 58B and the short extension portion 64B are non-abutting extension portions.

The long extension portion 58A and the long extension portion 64A are formed in a lattice shape on the front surface 56a and the front surface 62a of the third body portion 56 and the fourth body portion 62. The amount of protrusion of each of the long extension portion 58A and the long extension portion 64A decrease as they go from the widthwise intermediate portion to the widthwise end portion (corner portion 14c2) of the casing body 14 in accordance with the degree of bulging of the casing body 14. The long extension portion 64A provided at the widthwise end of the front surface 62a of the fourth body portion 62 is a corner abutting extension portion that abuts the inner wall of the corner portion 14c2 of the casing body 14.

The short extension portion 58B is provided in the vicinity of an abutting surface of the third row holder 52 contacting the fourth row holder 54. Part of the short extension portion 58B extends so as to protrude toward the inner wall of the casing body 14 and then bends toward the fourth row holder 54. Because of this bending, a bent portion 70 is formed at the distal end of part of the short extension portion 58B.

The short extension portion 64B is provided in the vicinity of an abutting surface of the fourth row holder 54 contacting the third row holder 52. Part of the short extension portion 64B extends so as to protrude toward the inner wall of the casing body 14 and then bends toward the third row holder 52. Because of this bending, a bent portion 72 is formed at the distal end of part of the short extension portion 64B.

The bent portion 70 and the bent portion 72 cover the abutting surface so as to hide part of the abutting surface between the third row holder 52 and the fourth row holder 54. Therefore, when the third row holder 52 and the fourth row holder 54 are viewed in a plan view, the bent portion 70 of the third row holder 52 and the bent portion 72 of the fourth row holder 54 vertically overlap each other.

Similarly to the first core pack 20, the long extension portion 58A and the short extension portion 58B adjacent to each other are continuous with each other via the coupling wall portion 38 that is slightly apart from the front surface 56a of the third body portion 56. The long extension portion 64A and the short extension portion 64B adjacent to each other are continuous with each other via the coupling wall portion 38 that is slightly apart from the front surface 62a of the fourth body portion 62. A clearance is formed between the front surface 56a of the third body portion 56 and the coupling wall portion 38 and between the front surface 62a of the fourth body portion 62 and the coupling wall portion 38. Because of this clearance, when the third row holder 52 and the fourth row holder 54 are injection-molded from molten plastic, it is possible to avoid the occurrence of sink marks at the proximal ends of the long extension portion 58A, the long extension portion 64A, the short extension portion 58B, and the short extension portion 64B.

The back surface portion 14b of the casing body 14 is substantially flat. Therefore, on the back surfaces of the first row holder 26 to the fourth row holder 54, the amounts of protrusion of the first back-side convex extension portion 34 to the fourth back-side convex extension portion 66 may be substantially equal to each other. In this case, all of the first back-side convex extension portion 34 to the fourth back-side convex extension portion 66 serve as abutting extension portions that abut the inner walls (including the corner portions 14c3 and 14c4) of the casing body 14. The first back-side convex extension portion 34 to the fourth back-side convex extension portion 66 are also provided with bent portions. For example, the bent portion covers the abutting surface between the first row holder 26 and the second row holder 28. Alternatively, the bent portion covers the abutting surface between the third row holder 52 and the fourth row holder 54.

The electrodes of the unit cells housed in the first row holder 26 or the second row holder 28 are electrically connected to each other via bus bars 90. Lead wires 92 are coupled to the bus bars 90. Multiple lead wires 92 are gathered to form a harness 94. On the front surface portion 14a, the harness 94 is hooked between the short extension portion 32B and the short extension portion 42B provided along the abutting surface between the first row holder 26 and the second row holder 28. The harness 94 is also hooked to the bent portion 36 and the bent portion 46. The harness 94 is similarly hooked to the bent portion of the back surface portion 14b.

The electrodes of the unit cells housed in the third row holder 52 or the fourth row holder 54 are also electrically connected to each other via the bus bars 90. The lead wires 92 connected to the bus bars 90 are gathered to form the harness 94. At the front surface portion 14a, the harness 94 is hooked between a short extension portion 58B and a short extension portion 64B provided along the abutting surface between the third row holder 52 and the fourth row holder 54. The harness 94 is also hooked to the bent portion 70 and the bent portion 72. The harness 94 is similarly hooked to the bent portion of the back surface portion 14b.

That is, the position of the harness 94 on the front surface portion 14a side is determined by the short extension portions 32B, 42B, 58B, and 64B including the bent portions 36, 46, 70, and 72. In this way, the short extension portions 32B, 42B, 58B, and 64B (the bent portions 36, 46, 70, and 72) serve as regulating portions that regulate the position of the harness 94. Similarly, on the back surface portion 14b side, the position of the harness 94 is regulated by the first back-side convex extension portion 34 to the fourth back-side convex extension portion 66 including the bent portions.

As shown in FIG. 2, each of the first front-side convex extension portion 32, the first back-side convex extension portion 34, the second front-side convex extension portion 42, and the second back-side convex extension portion 44 provided for the first core pack 20 and each of the third front-side convex extension portion 58, the third back-side convex extension portion 60, the fourth front-side convex extension portion 64, and the fourth back-side convex extension portion 66 provided for the second core pack 22 are positionally in a line-symmetric relationship. That is, the first front-side convex extension portion 32 and the fourth front-side convex extension portion 64 are located at an equal distance from the center line CL passing through a facing portion between the second row holder 28 and the third row holder 52. Similarly, the first back-side convex extension portion 34 and the fourth back-side convex extension portion 66 are positioned at an equal distance from the center line CL. So are the positional relationship between the second front-side convex extension portion 42 and the third front-side convex extension portion 58 and the positional relationship between the second back-side convex extension portion 44 and the third back-side convex extension portion 60.

The first front-side convex extension portion 32 and the first back-side convex extension portion 34 are apart from each other by 180°. In other words, the first front-side convex extension portion 32 and the first back-side convex extension portion 34 are located on an axis parallel to the center line CL. So is the positional relationship between the second front-side convex extension portion 42 and the second back-side convex extension portion 44. The third front-side convex extension portion 58 and the third back-side convex extension portion 60 are also in a positional relationship of being apart from each other by 180°. The fourth front-side convex extension portion 64 and the fourth back-side convex extension portion 66 are also in a positional relationship of being apart from each other by 180°.

The battery pack 10 according to the present embodiment is basically configured as described above. Next, effects of the battery pack 10 will be described.

As shown in FIG. 1, the front surface portion 14a of the casing body 14 is formed as a curved wall portion. Therefore, the design of the battery pack 10 improves. That is, the battery pack 10 has an excellent appearance.

Here, the first core pack 20 and the second core pack 22 housed in the casing 18 are provided with the long extension portions 32A, 42A, 58A, and 64A on the front surface portions of the first row holder 26 to the fourth row holder 54. The long extension portions 32A, 42A, 58A, 64A and the first back-side convex extension portion 34 to the fourth back-side convex extension portion 66 abut the inner wall of the front surface portion 14a or the back surface portion 14b of the casing body 14. Therefore, for example, when the first row holder 26 to the fourth row holder 54 are housed in the casing 18, the first row holder 26 to the fourth row holder 54 can be easily positioned in the casing 18. This facilitates the assembly of the battery pack 10.

As described above, the first row holder 26 to the fourth row holder 54 can be manufactured by injection-molding molten resin. That is, the first body portion 30 to the fourth body portion 62, the first front-side convex extension portion 32 to the fourth front-side convex extension portion 64, and the first back-side convex extension portion 34 to the fourth back-side convex extension portion 66 are simultaneously molded. Therefore, it is not necessary to individually manufacture the first body portion 30 to the fourth body portion 62, the first front-side convex extension portion 32 to the fourth front-side convex extension portion 64, and the first back-side convex extension portion 34 to the fourth back-side convex extension portion 66. Therefore, it is not necessary to join separately-manufactured parts. That is, complicated work is not required. In addition, it is possible to avoid an increase in the number of work steps required until the battery pack 10 is obtained.

When a user loads the battery pack 10 configured as described above into an external device or a charging device, for example, the casing body 14 configuring the casing 18 may accidentally come into contact with the external device, the charging device, or the like. In this case, an external force acts on the casing body 14.

However, in respect of the casing body 14, the inner wall of the front surface portion 14a is supported by the long extension portions 32A, 42A, 58A, and 64A, and the inner wall of the back surface portion 14b is supported by the first back-side convex extension portion 34 to the fourth back-side convex extension portion 66. Therefore, the casing body 14 exhibits sufficient rigidity. Therefore, it is possible to prevent the casing body 14 from deforming.

In addition, each of the first front-side convex extension portion 32 to the fourth front-side convex extension portion 64 and each of the first back-side convex extension portion 34 to the fourth back-side convex extension portion 66 are in a positional relationship of being separated by 180°. Furthermore, the first front-side convex extension portion 32 and the fourth front-side convex extension portion 64 are positionally in a line-symmetric relationship. Similarly, the first back-side convex extension portion 34 and the fourth back-side convex extension portion 66 are positionally in a line-symmetric relationship. The second front-side convex extension portion 42 and the third front-side convex extension portion 58 are also positionally in a line-symmetric relationship, and the second back-side convex extension portion 44 and the third back-side convex extension portion 60 are also positionally in a line-symmetric relationship. That is, the convex extension portion of the first core pack 20 and the convex extension portion of the second core pack 22 are bilaterally symmetric. Therefore, the battery pack 10 ensures uniform rigidity.

That is, the battery pack 10 is prevented from being formed with a portion having a significantly lower rigidity than other portions. Therefore, it is possible to prevent the casing body 14 from deforming, no matter which part of the casing body 14 receives the external force.

It is expected that the battery pack 10 will relatively frequently come into contact with objects at the corner portions 14c1 to 14c4 of the casing body 14. Here, in the present embodiment, the corner abutting extension portions abut the inner walls of the corner portions 14c1 to 14c4 of the casing body 14. Since the rigidity of the corner portions 14c1 to 14c4 is ensured in this way, even if the corner portions 14c1 to 14c4 frequently abut objects, the corner portions 14c1 to 14c4 are suppressed from being dented or deformed.

Further, the harness 94 in which the lead wires 92 are bundled pass through the bent portions 36, 46, 70, 72 or the like provided for the first core pack 20 or the second core pack 22. Therefore, the harness 94 is prevented from abutting the inner wall of the casing body 14. Therefore, even when an external force acts on the casing body 14, the external force is unlikely to affect the harness 94. Thus, the position of the harness 94 within the casing 18 is maintained. In other words, the position of the harness 94 can be regulated before and after the external force is applied.

Furthermore, each of the first core pack 20 and the second core pack 22 has two cell holders as described above. The bent portions 36, 46, 70, 72 or the like for hooking the harness 94 are provided so as to straddle two cell holders. Therefore, even if one of the two cell holders deforms under the influence of an external force, the position of the harness 94 can be restricted by the bent portion of the remaining cell holder.

That is, in this case, it is possible to prevent the harness 94 from being displaced. Therefore, it is also possible to suppress occurrence of an electrical failure such as a short circuit between the harnesses 94.

The present invention is not limited to the embodiment described above, and various additional or modified structures may be adopted therein without departing from the essence and gist of the present invention.

For example, even when the back surface portion 14b of the casing body 14 is flat, the first core pack 20 and the second core pack 22 may be provided with an abutting extension portion that abuts the inner wall of the back surface portion 14b and a non-abutting extension portion that does not abut the inner wall, similarly to the front surface portion 14a.

The back surface portion 14b of the casing body 14 may be curved in the same manner as the front surface portion 14a. In this case, it is preferable that the first back-side convex extension portion 34 to the fourth back-side convex extension portion 66 have the same configuration as the first front-side convex extension portion 32 to the fourth front-side convex extension portion 64.

## Claims

1. A battery pack (10) comprising:
a cell holder that holds a plurality of unit cells; and
a casing (18) that houses the cell holder,
wherein
the cell holder includes
a holder body portion (30, 40, 56, 62) that holds the plurality of unit cells, and
a convex extension portion (32, 42, 58, 64, 34, 44, 60, 66) that extends so as to protrude from an outer wall of the holder body portion toward an inner wall of the casing, and
the convex extension portion includes an abutting extension portion (32A, 42A, 58A, 64A) that abuts an internal wall of the casing.

2. The battery pack according to claim 1, wherein another abutting extension portion that abuts the inner wall of the casing is provided at a position on the holder body portion 180° apart from a position where the abutting extension portion is provided.

3. The battery pack according to claim 1 or 2, wherein
the casing includes a corner portion (14c1 to 14c4) that is bent at a predetermined angle, and
the convex extension portion includes a corner abutting extension portion that abuts an inner wall of the corner portion.

4. The battery pack according to any one of claims 1 to 3, wherein the convex extension portion is formed at each of line-symmetric locations on the holder body portion.

5. The battery pack according to any one of claims 1 to 4, wherein
the convex extension portion includes a non-abutting extension portion (32B, 42B, 58B, 64B) that protrudes by a smaller amount than the abutting extension portion and does not abut the internal wall of the casing, and
the non-abutting extension portion positions a harness (94) that is electrically connected to electrodes of the unit cells.

6. The battery pack according to claim 5, wherein
the cell holder includes a first holder (24) and a second holder (50) that abut each other, and
the harness is routed along an abutting surface between the first holder and the second holder.

7. The battery pack according to claim 6, wherein
the non-abutting extension portion includes
a bent portion (36, 46) bent from a direction toward the inner wall of the casing to the first holder or
a bent portion (70, 72) bent from a direction toward the inner wall of the casing to the second holder, and
the harness passes through the bent portion.
